# EUROPEAN PATENT APPLICATION

(11) **EP 4 589 166 A1**
(43) Date of publication of application: **23.07.2025**
(21) Application number: 23865009.7
(22) Date of filing: 15.06.2023
(51) Int. Cl.: F16D 65/28, B60T 1/06, F16H 21/24, F16H 63/34, F16D 121/24, F16D 125/28, F16D 125/48, F16D 125/64, F16D 127/06

(54) **VEHICLE PARKING DEVICE**

(30) Priority: 15.09.2022 JP 2022146964
(71) Applicant: AISIN CORPORATION, Kariya-shi, Aichi 448-8650 (JP)
(72) Inventor: KATO, Ken, Kariya-shi, Aichi 448-8650 (JP)
(74) Representative: TBK
(86) International application number: PCT/JP2023/022284
(87) International publication number: WO 2024/057645

(57) **Abstract**

A vehicle parking device 100 includes a motor 4, a transmission mechanism 6, and a parking rod 3. The transmission mechanism 6 includes a driven gear 62, a link member 64 including a drive-side end E1 connected to the driven gear 62 to rotate as the driven gear 62 rotates, and an output-side end E2 that is another end and rotates as the drive-side end E1 rotates, and a first rotary shaft 63 disposed on the rotation center axis Cg of the driven gear 62. The link member 64 includes a relief portion 64d to avoid interference with the first rotary shaft 63 while the link member 64 travels between a parking lock state and a parking lock released state.

## Description

### TECHNICAL FIELD

The present invention relates to a vehicle parking device, and more particularly, to a vehicle parking device including a motor.

### BACKGROUND ART

A vehicle parking device including a motor has been known. The vehicle parking device is disclosed, for example, in JP 2022-88011 A.

JP 2022-88011 A discloses a vehicle parking device including a motor. The vehicle parking device includes a linear motion shaft, a link, a lever, and a parking rod. The linear motion shaft is configured to advance and retract in the extending direction of the linear motion shaft when driven by the motor. One end of the link is connected to the linear motion shaft by a first pin. The other end of the link is connected to one end of the lever by a second pin. The other end of the lever is connected to the parking rod by a third pin. Consequently, when driven by the motor, the parking rod advances and retracts to a parking position corresponding to a parking lock state and a non-parking position corresponding to a parking lock released state.

In the vehicle parking device of JP 2022-88011 A, when the parking rod has moved to the parking position, the link and the linear motion shaft intersect at right angles. In this case, a point of intersection at right angles that is the point of intersection of the extending direction of the link with the extending direction of the linear motion shaft, the one end of the link, and the other end the link are aligned when viewed from one side in the extending direction of the first pin. Here, since the point of intersection at right angles, the one end of the link, and the other end of the link are aligned, torque transmitted from the parking rod is not transmitted to the linear motion shaft through the link. That is, the state in which the point of intersection at right angles, the one end of the link, and the other end of the link are aligned is a state in which the link is prevented from moving even when an external force (e.g., vibration of the vehicle) is applied to the parking rod.

In the vehicle parking device of JP 2022-88011 A, when the parking rod moves to the non-parking position, the one end of the link moves toward the parking rod, so that the link and the linear motion shaft intersect at an acute angle. In this case, the point of intersection at right angles, the one end of the link, and the other end of the link are not aligned when viewed from one side in the extending direction of the first pin. Here, since the point of intersection at right angles, the one end of the link, and the other end of the link are not aligned, torque transmitted from the parking rod is transmitted to the linear motion shaft through the link. That is, with the point of intersection at right angles, the one end of the link, and the other end of the link not aligned, the link moves when the parking rod moves due to an external force. Here, when the link moves due to the movement of the parking rod caused by an external force, the one end of the link may return to the position in the parking lock state.

### CITATIONS LIST

### PATENT LITERATURE

Patent Literature 1: JP 2022-88011 A

### SUMMARY OF INVENTION

### TECHNICAL PROBLEMS

Thus, the vehicle parking device of JP 2022-88011 A achieves a structure in which only in the parking lock state, the link is prevented from moving even when an external force is applied to the parking rod. Therefore, it is desired that the vehicle parking device of JP 2022-88011 A achieve a structure in which in both the parking lock state and the parking lock released state, the link (link member) is prevented from moving even when an external force is applied to the parking rod. The external force may be an inertial force of a component caused by vehicle vibration, a reaction force when a retraction spring of the parking rod is deformed, or the like.

The present invention has been made to solve the above-described problems. The present invention provides a vehicle parking device that can achieve a structure in which in both a parking lock state and a parking lock released state, a link member is prevented from moving even when an external force is applied to a parking rod.

### SOLUTIONS TO PROBLEMS

A vehicle parking device according to an aspect of the present invention includes a motor that generates a driving force for switching between a parking lock state and a parking lock released state of a vehicle, a transmission mechanism connected to the motor to transmit a driving force of the motor, and a parking rod connected to the transmission mechanism to travel between a parking position corresponding to the parking lock state and a non-parking position corresponding to the parking lock released state. The transmission mechanism includes a driven gear that rotates about a rotation center axis by a driving force from the motor, a link member including a drive-side end connected to the driven gear to rotate as the driven gear rotates, and an output-side end that is another end and rotates as the drive-side end rotates, and a first rotary shaft disposed on the rotation center axis of the driven gear. The link member includes a relief portion to avoid interference with the first rotary shaft while the link member travels between the parking lock state and the parking lock released state.

In the vehicle parking device according to the aspect of the present invention, as described above, the link member includes the relief portion to avoid interference with the first rotary shaft while the link member travels between the parking lock state and the parking lock released state. Consequently, in the parking lock state during the travel between the parking lock state and the parking lock released state, the link member is disposed in a position where the relief portion avoids interference with the first rotary shaft, so that even when the parking rod tries to move by an external force, the link member can block torque caused by the external force. In the parking lock released state during the travel between the parking lock state and the parking lock released state, the link member is disposed in a position to avoid interference with the first rotary shaft, so that even when the parking rod tries to move by an external force, the link member can block torque caused by the external force. These can achieve a structure that prevents the link member from moving even when an external force is applied to the parking rod in both the parking lock state and the parking lock released state. When the link member moves forward or backward as the driven gear rotates to switch to either the parking lock released state or the parking lock released state, the relief portion can prevent interference between the driven gear and the link member.

In the vehicle parking device according to the aspect, the relief portion is preferably bent or curved to avoid interference with the rotary shaft while the link member travels between the parking lock state and the parking lock released state.

With this configuration, the structure of the relief portion to avoid interference between the driven gear and the link member can be achieved by a simple structure, so that the structure of the link member can be prevented from being complicated.

In the vehicle parking device according to the aspect, the rotation center axis of the driven gear, the drive-side end of the link member, and the output-side end of the link member are preferably aligned in the parking lock state when viewed from one side in the extending direction of the rotation center axis of the driven gear.

With this configuration, in the parking lock state, the link member with the drive-side end and the output-side end aligned with the rotation center axis of the driven gear is in a dead center position where torque is not transmitted. Thus, even when the parking rod tries to move by an external force, torque caused by the external force is blocked by the link member in the dead center. Consequently, the structure in which the link member does not move in the dead center position in a link mechanism in the parking lock state even when an external force is applied to the parking rod eliminates the need to provide a sensor for detecting the movement of the parking rod due to an external force, to drive the motor to prevent the driven gear from moving, based on a detection signal of the sensor. As a result, it is not necessary to supply power to the sensor and the motor in the parking lock state, so that the power consumption of the vehicle parking device can be reduced.

In this case, when viewed from one side in the extending direction of the rotation center axis of the driven gear, the rotation center axis of the driven gear, the drive-side end of the link member disposed opposite the output-side end with respect to the rotation center axis of the driven gear, and the output-side end of the link member are preferably aligned.

With this configuration, by disposing the drive-side end of the link member on the output-side end side opposite the output-side end with respect to the rotation center axis of the driven gear in the parking lock state, a structure can be achieved in which the link member does not move in the dead center position even when an external force is applied to the parking rod. As a result, it is possible to prevent an increase in the amount of travel of the link member to achieve a structure in which the link member does not move in the dead center position in the link mechanism.

In the vehicle parking device according to the aspect, the rotation center axis of the driven gear, the drive-side end of the link member, and the output-side end of the link member are preferably aligned in the parking lock released state when viewed from one side in the extending direction of the rotation center axis of the driven gear.

With this configuration, in the parking lock released state, the link member with the drive-side end and the output-side end aligned with the rotation center axis of the driven gear is in a dead center position where torque is not transmitted. Thus, even when the parking rod tries to move by an external force, torque caused by the external force is blocked by the link member in the dead center. Consequently, the structure in which the link member does not move in the dead center position in the link mechanism in the parking lock released state even when an external force is applied to the parking rod eliminates the need to provide a sensor for detecting the movement of the parking rod due to an external force, to drive the motor to prevent the driven gear from moving, based on a detection signal of the sensor. As a result, it is not necessary to supply power to the sensor and the motor in the parking lock released state, so that the power consumption of the vehicle parking device can be reduced.

In this case, when viewed from one side in the extending direction of the rotation center axis of the driven gear, the rotation center axis of the driven gear, the drive-side end of the link member disposed on the output-side end side with respect to the rotation center axis of the driven gear, and the output-side end of the link member are preferably aligned.

With this configuration, by disposing the drive-side end of the link member on the output-side end side with respect to the rotation center axis of the driven gear in the parking lock released state, a structure can be achieved in which the link member does not move in the dead center position even when an external force is applied to the parking rod. As a result, it is possible to prevent an increase in the amount of travel of the link member to achieve a structure in which the link member does not move in the dead center position in the link mechanism.

In the vehicle parking device according to the aspect, the transmission mechanism preferably further includes a stopper that prevents further rotation of the driven gear due to an external force applied to the parking rod in the parking lock released state, and prevents further rotation of the driven gear due to an external force applied to the parking rod in the parking lock state. In the parking lock released state, the stopper prevents further rotation of the driven gear, and the link member with the drive-side end and the output-side end aligned with the rotation center axis of the driven gear prevents rotation of the driven gear that returns the parking rod to the parking position. In the parking lock state, the stopper prevents further rotation of the driven gear, and the link member with the drive-side end and the output-side end aligned with the rotation center axis of the driven gear prevents rotation of the driven gear that returns the parking rod to the non-parking position.

With this configuration, the stopper prevents further rotation of the driven gear, and the structure in which the link member does not move in the dead center position prevents rotation of the driven gear that returns the driven gear to the other shift position (the parking position or the non-parking position). Consequently, in each of the parking lock state and the parking lock released state, the rotation of the driven gear can be prevented in the range between the rotation angle at which the stopper prevents rotation of the driven gear and the rotation angle at which the structure in which the link member does not move in the dead center position in the link mechanism prevents rotation of the driven gear. As a result, it is possible to achieve a structure that prevents rotation of the driven gear more reliably in each of the parking lock state and the parking lock released state.

In the vehicle parking device according to the aspect, the transmission mechanism preferably further includes a connecting member connecting the link member and the parking rod. The connecting member includes a second rotary shaft disposed at the position of the rotation center of the connecting member. The connecting member is configured to rotate about a rotation center axis passing through the rotation center of the second rotary shaft.

With this configuration, by the link member traveling between the parking lock state and the parking lock released state, the connecting member can be rotated around the second rotary shaft and thus can cause the parking rod to travel between the parking position and the non-parking position.

In a vehicle parking device according to another aspect, the following configuration is also conceivable.

### (Supplementary note 1)

A vehicle parking device according to another aspect of the present invention includes a motor that generates a driving force for switching between a parking lock state and a parking lock released state of a vehicle, a transmission mechanism connected to the motor to transmit a driving force of the motor, and a parking rod connected to the transmission mechanism to travel between a parking position corresponding to the parking lock state and a non-parking position corresponding to the parking lock released state. The transmission mechanism includes a driven gear that rotates about a rotation center axis by a driving force from the motor, and a link member including a drive-side end connected to the driven gear to rotate as the driven gear rotates, and an output-side end that is another end and rotates as the drive-side end rotates. The rotation center axis of the driven gear, the drive-side end of the link member, and the output-side end of the link member are aligned in both the parking lock state and the parking lock released state when viewed from one side in the extending direction of the rotation center axis of the driven gear.

In the vehicle parking device according to the other aspect of the present invention, as described above, the rotation center axis of the driven gear, the drive-side end of the link member, and the output-side end of the link member are aligned in both the parking lock state and the parking lock released state when viewed from one side in the extending direction of the rotation center axis of the driven gear. Here, the link member with the drive-side end and the output-side end aligned with the rotation center axis of the driven gear is in a dead center position where torque is not transmitted. Thus, even when the parking rod tries to move by an external force, torque caused by the external force is blocked by the link member in the dead center. This can achieve a structure in which the link member does not move in the dead center position in both the parking lock state and the parking lock released state even when an external force is applied to the parking rod. The structure in which the link member does not move in the dead center position in a link mechanism in both the parking lock state and the parking lock released state even when an external force is applied to the parking rod eliminates the need to provide a sensor for detecting the movement of the parking rod due to an external force, to drive the motor to prevent the driven gear from moving, based on a detection signal of the sensor. Consequently, it is not necessary to supply power to the sensor and the motor in both the parking lock state and the parking lock released state, so that the power consumption of the vehicle parking device can be reduced.

### (Supplementary note 2)

In the vehicle parking device according to the other aspect, in the parking lock state, the rotation center axis of the driven gear, the drive-side end of the link member disposed opposite the output-side end with respect to the rotation center axis of the driven gear, and the output-side end of the link member are preferably aligned when viewed from one side in the extending direction of the rotation center axis of the driven gear, and in the parking lock released state, the rotation center axis of the driven gear, the drive-side end of the link member disposed on the output-side end side with respect to the rotation center axis of the driven gear, and the output-side end of the link member are preferably aligned when viewed from one side in the extending direction of the rotation center axis of the driven gear.

With this configuration, by disposing the drive-side end of the link member opposite the output-side end with respect to the rotation center axis of the driven gear, or on the output-side end side with respect to the rotation center axis of the driven gear, a structure can be achieved in which the link member does not move in the dead center position even when an external force is applied to the parking rod. As a result, it is possible to prevent an increase in the amount of travel of the link member to achieve a structure in which the link member does not move in the dead center position in the link mechanism.

### (Supplementary note 3)

In the vehicle parking device according to the other aspect, the transmission mechanism preferably further includes a stopper that prevents further rotation of the driven gear due to an external force applied to the parking rod in the parking lock released state, and prevents further rotation of the driven gear due to an external force applied to the parking rod in the parking lock state. In the parking lock released state, the stopper prevents further rotation of the driven gear, and the link member with the drive-side end and the output-side end aligned with the rotation center axis of the driven gear prevents rotation of the driven gear that returns the parking rod to the parking position. In the parking lock state, the stopper prevents further rotation of the driven gear, and the link member with the drive-side end and the output-side end aligned with the rotation center axis of the driven gear prevents rotation of the driven gear that returns the parking rod to the non-parking position.

With this configuration, the stopper prevents further rotation of the driven gear, and the structure in which the link member does not move in the dead center position prevents rotation of the driven gear that returns the driven gear to the other shift position (the parking position or the non-parking position). Consequently, in each of the parking lock state and the parking lock released state, the rotation of the driven gear can be prevented in the range between the rotation angle at which the stopper prevents rotation of the driven gear and the rotation angle at which the structure in which the link member does not move in the dead center position in the link mechanism prevents rotation of the driven gear. As a result, it is possible to achieve a structure that prevents rotation of the driven gear more reliably in each of the parking lock state and the parking lock released state.

### (Supplementary note 4)

In the vehicle parking device according to the other aspect, the transmission mechanism preferably further includes a rotary shaft disposed on the rotation center axis of the driven gear, and the link member preferably includes a relief portion bent or curved to avoid interference with the rotary shaft.

With this configuration, when moving with the rotation of the driven gear to switch to either the parking lock released state or the parking lock released state, the relief portion can prevent interference between the driven gear and the link member.

### (Supplementary note 5)

In the vehicle parking device according to the other aspect, the transmission mechanism preferably further includes a connecting member connecting the link member and the parking rod. The connecting member includes a first link connected at one end to the link member, a second link connected at one end to the parking rod, and an output shaft connecting the other end of the first link and the other end of the second link. The first link and the second link are configured to rotate together about the rotation center axis of the output shaft.

With this configuration, in both the parking lock state and the parking lock released state, even when an external force is applied to the parking rod, causing torque on the first link and the second link, the link member in the dead center position does not transmit the torque to the driven gear. As a result, the link mechanism with the connecting member including the first link and the second link can prevent rotation of the driven gear due to an external force.

### (Supplementary note 6)

In the vehicle parking device according to the other aspect, the transmission mechanism preferably further includes a connecting member connecting the link member and the parking rod. The connecting member includes a lever connected at one end to the link member and connected at the other end to the parking rod, and a rotary shaft disposed at the position of the rotation center of the lever. The lever is configured to rotate about a rotation center axis passing through the rotation center of the rotary shaft.

With this configuration, in both the parking lock state and the parking lock released state, even when an external force is applied to the parking rod, causing torque on the lever, the link member in the dead center position does not transmit the torque to the driven gear. As a result, the lever mechanism with the connecting member including the lever can prevent rotation of the driven gear due to an external force.

### (Supplementary note 7)

In the vehicle parking device according to the other aspect, in both the parking lock state and the parking lock released state, the distance between the rotation center axis of the driven gear and the drive-side end of the link member is smaller than the distance between the rotation center axis of the driven gear and the output-side end of the link member.

This configuration can reduce the amount of travel of the drive-side end of the link member that rotates about the rotation center axis of the driven gear when the driven gear rotates, and thus can prevent an increase in space required for rotating the drive-side end of the link member.

### (Supplementary note 8)

In the vehicle parking device according to the other aspect, when viewed from one side in the extending direction of the rotation center axis of the driven gear, the drive-side end of the link member is disposed either opposite the output-side end or on the output-side end side with respect to the rotation center axis of the driven gear, so as to be aligned with the rotation center axis of the driven gear and the output-side end in each of the parking lock state and the parking lock released state.

With this configuration, by disposing the drive-side end of the link member opposite the output-side end with respect to the rotation center axis of the driven gear, or on the output-side end side with respect to the rotation center axis of the driven gear, a structure can be achieved in which the link member does not move in the dead center position in the link mechanism even when an external force is applied to the parking rod. As a result, it is possible to prevent an increase in the amount of travel of the link member to achieve a structure in which the link member does not move in the dead center position in the link mechanism.

### (Supplementary note 9)

In the vehicle parking device according to the other aspect, the transmission mechanism is a reduction mechanism to reduce speed such that while the parking rod travels from the parking position to the non-parking position, the reduction ratio of the transmission mechanism decreases from the maximum reduction ratio to the minimum reduction ratio, and the reduction ratio of the transmission mechanism increases from the minimum reduction ratio to the maximum reduction ratio.

With this configuration, the reduction ratio that has been increased to the maximum reduction ratio can be reduced by the link member in the dead center position for preventing the driven gear from being rotated by torque produced when an external force is applied to the parking rod. As a result, the transmission mechanism can be smoothly driven at the time of switching from the parking position to the non-parking position or from the non-parking position to the parking position.

### BRIEF DESCRIPTION OF DRAWINGS

FIG 1 is a front view showing a parking lock released state of a vehicle parking device according to a first embodiment.
FIG 2 is a front view showing a parking lock state of the vehicle parking device according to the first embodiment.
FIG 3 is a graph showing changes in the reduction ratio of a transmission mechanism during rotation of a driven gear of the vehicle parking device according to the first embodiment.
FIG 4 is a front view showing a state in which an engaging claw of a parking pawl faces a tooth of a parking gear in the parking lock released state of the vehicle parking device according to the first embodiment.
FIG 5 is a front view showing a state in which the engaging claw of the parking pawl presses a tooth of the parking gear in a parking lock wait state of the vehicle parking device according to the first embodiment.
FIG 6 is a front view showing a case where an external force that moves a parking rod occurs in the parking lock released state of the vehicle parking device according to the first embodiment.
FIG 7 is a front view showing a case where an external force that moves the parking rod occurs in the parking lock state of the vehicle parking device according to the first embodiment.
FIG 8 is a graph showing a first restriction range and a second restriction range in changes in the reduction ratio of the transmission mechanism during rotation of the driven gear of the vehicle parking device according to the first embodiment.
FIG 9 is a front view showing a parking lock released state of a vehicle parking device according to a second embodiment.
FIG 10 is a front view showing a parking lock state of the vehicle parking device according to the second embodiment.
FIG 11 is a front view showing a state in which an engaging claw of a parking pawl faces a tooth of a parking gear in the parking lock released state of the vehicle parking device according to the second embodiment.
FIG 12 is a front view showing a state in which the engaging claw of the parking pawl presses a tooth of the parking gear in a parking lock wait state of the vehicle parking device according to the second embodiment.

### DESCRIPTION OF EMBODIMENTS

Hereinafter, embodiments embodying the present invention will be described with reference to the drawings.

### [First embodiment]

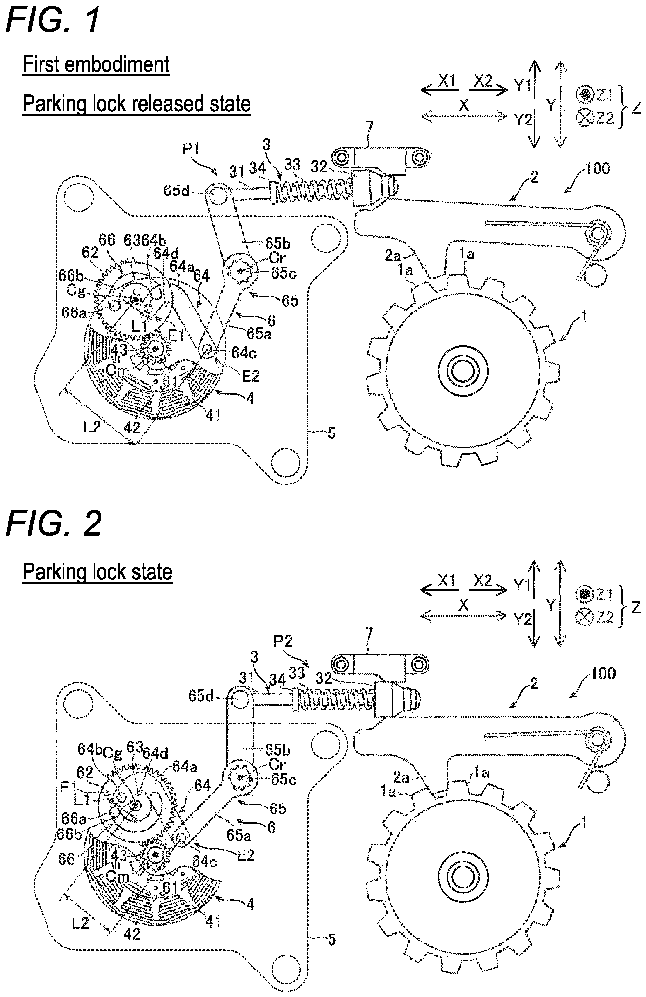

A configuration of a vehicle parking device 100 according to a first embodiment will be described with reference to FIGS. 1 to 8.

As shown in FIGS. 1 and 2, the vehicle parking device 100 is mounted on a vehicle. In the vehicle, electrical shift switching control is performed when an occupant (driver) performs a shift switching operation through a parking switch.

That is, when the driver operates the parking switch, a shift position switching signal is input to the vehicle parking device 100 through a sensor provided in the parking switch. Based on the signal input from the parking switch, the vehicle parking device 100 is switched to a parking (P) position or a non-parking (non-P) position according to the switching operation of the occupant, and the vehicle parking device 100 switches to locking the rotation of a wheel or not.

The shift switching control as described above is called shift-by-wire. The vehicle in which this shift switching control is performed is an electric vehicle including only a motor as a power source.

The vehicle parking device 100 has a structure that allows switching between locking and unlocking the rotation of the wheel. The vehicle parking device 100 includes a parking gear 1, a parking pawl 2, a parking rod 3, a motor 4, a case 5, and a transmission mechanism 6.

A direction in which the rotation center axis Cm of the motor 4 extends is defined as the Z direction. The Z direction toward one side is defined as the Z1 direction, and the Z direction toward the opposite side is defined as the Z2 direction. A direction in which the motor 4 and the parking gear 1 are aligned is defined as the X direction. The X direction toward the motor 4 is defined as the X1 direction, and the X direction toward the parking gear 1 in defined as the X2 direction. A direction in which the parking gear 1 and the parking pawl 2 are aligned is defined as the Y direction. The Y direction toward the parking pawl 2 is defined as the Y1 direction, and the Y direction toward the parking gear 1 is defined as the Y2 direction. The X direction is orthogonal to the Y direction. The Z direction is orthogonal to the X direction and the Y direction.

The parking gear 1 is fixed to the wheel. The parking gear 1 rotates together with the wheel. The parking gear 1 is configured such that a locking claw 2a of the parking pawl 2 can engage with teeth 1a of the parking gear 1.

The parking pawl 2 rotates toward the parking gear 1, guided to a position where the locking claw 2a and the teeth 1a of the parking gear 1 engage with each other (locking position). When the locking claw 2a is guided to the locking position, the parking pawl 2 stops the rotation of the parking gear 1. Thus, when the locking claw 2a of the parking pawl 2 is guided to the locking position, a parking lock state is established.

The parking pawl 2 rotates in a direction away from the teeth 1a of the parking gear 1, guided to a position where the engagement between the locking claw 2a and the teeth 1a of the parking gear 1 is released (unlocking position). When the locking claw 2a of the parking pawl 2 is guided to the unlocking position, the parking gear 1 is allowed to rotate. Thus, when the locking claw 2a of the parking pawl 2 is guided to the unlocking position, a parking lock released state is established.

The parking rod 3 is configured to move along each of the X1 direction and the X2 direction. The parking rod 3 moves in the X1 direction to move to a non-parking position P1 corresponding to the parking lock released state. The parking rod 3 moves in the X2 direction to move to a parking position P2 corresponding to the parking lock state. That is, the parking rod 3 is configured to travel between the parking position P2 corresponding to the parking lock state and the non-parking position P1 corresponding to the parking lock released state. The parking rod 3 is connected to the transmission mechanism 6 to linearly move by a driving force transmitted through the transmission mechanism 6 from the motor 4.

The parking rod 3 includes a rod 31, a cam 32, a retraction spring 33, and a support 34.

The rod 31 is a rod-shaped member extending along the X direction.

The cam 32 is fixed to the distal end of the rod 31. The cam 32 is configured to move forward and backward in the direction to approach the parking pawl 2 (X2 direction) and the direction to move away from the parking pawl 2 (X1 direction) together with the forward and backward movement of the parking rod 3. Here, when the cam 32 moves in the direction to approach the parking pawl 2, the cam surface of the cam 32 causes the parking pawl 2 to rotate such that the locking claw 2a reaches the locking position. When the cam 32 moves in the direction away from the parking pawl 2, the cam surface of the cam 32 causes the parking pawl 2 to rotate such that the locking claw 2a reaches the unlocking position.

The retraction spring 33 is, for example, a coil spring or the like. One end of the retraction spring 33 in the X2 direction abuts the end of the cam 32 in the X1 direction at the rod 31. The other end of the retraction spring 33 in the X1 direction abuts the end of the support 34 in the X2 direction at the rod 31 to be supported by the support 34. Thus, the retraction spring 33 is configured to press the cam 32 against the guide 7. The guide 7 is configured to guide the cam 32 moving in the X2 direction in the Y2 direction (to the parking pawl 2). The guide 7 faces the parking pawl 2 in the Y direction.

The motor 4 is configured to generate a driving force to switch between the parking lock state and the parking lock released state of the vehicle. The motor 4 is a surface permanent magnet (SPM) three-phase motor with embedded permanent magnets. Specifically, the motor 4 includes a stator 41, a rotor 42, and a motor shaft 43. The stator 41 includes a stator core and multi-phase (U-phase, V-phase, and W-phase) exciting coils that generate a magnetic force when energized. The rotor 42 is rotated about a rotation center axis Cm extending in the Z direction. The motor shaft 43 is connected to the rotor 42. The motor shaft 43 is rotated about the rotation center axis Cm extending in the Z direction together with the rotor 42.

The case 5 is a member housing the motor 4 fixed in position inside. The case 5 rotatably supports the motor shaft 43 provided to the motor 4 fixed in position. A rotary shaft 63 and an engaging pin 66a described below are fixed to the case 5 at fixed positions. The rotary shaft 63 is an example of a "first rotary shaft" in the claims.

### (Transmission mechanism)

As shown in FIGS. 1 and 2, the transmission mechanism 6 is configured to transmit the driving force of the motor 4 to the parking rod 3. The input side of the transmission mechanism 6 is connected to the motor 4. The output side of the transmission mechanism 6 is connected to the parking rod 3.

Specifically, the transmission mechanism 6 includes a drive gear 61, a driven gear 62, the rotary shaft 63, a link member 64, a connecting member 65, and a stopper 66.

The drive gear 61 is configured to rotate about the rotation center axis Cm extending in the Z direction together with the motor shaft 43 by the driving force from the motor 4. The drive gear 61 is a pinion gear (small-diameter gear) mounted on the motor shaft 43. The drive gear 61 meshes with the driven gear 62.

The driven gear 62 is configured to rotate about a rotation center axis Cg by the driving force from the motor 4. The driven gear 62 is a sector gear (fan-shaped gear) having a plurality of external teeth on part of its outer periphery, mounted on the rotary shaft 63. The driven gear 62 is connected to the motor 4 through the drive gear 61. The plurality of external teeth of the driven gear 62 mesh with external teeth of the drive gear 61. The number of the teeth of the driven gear 62 is larger than the number of the teeth of the drive gear 61. Therefore, the rotational speed of the drive gear 61 is reduced in the driven gear 62. That is, torque from the motor 4 is increased by being transmitted from the drive gear 61 to the driven gear 62.

The rotary shaft 63 is disposed on the rotation center axis Cg of the driven gear 62. The rotary shaft 63 extends in the Z direction. The driven gear 62 is integrally rotatably mounted on the rotary shaft 63.

The link member 64 can transmit torque from the driven gear 62 to the connecting member 65, and can transmit torque from the connecting member 65 to the driven gear 62. That is, the link member 64 is a connecting member connecting the driven gear 62 and the connecting member 65.

The link member 64 includes a link body 64a, a drive-side pin 64b, an output-side pin 64c, and a relief portion 64d.

The link body 64a is a J-shaped plate-shaped member when viewed from the Z1 direction.

The drive-side pin 64b connects the drive side (input side) of the link body 64a and the driven gear 62. The drive-side pin 64b is connected to a drive-side end E1 of the link body 64a. The drive-side end E1 is a portion of the link body 64a located closer to the rotary shaft 63 than the output-side pin 64c. The drive-side end E1 is a portion located around the rotary shaft 63. The drive-side pin 64b is connected to a portion of the driven gear 62 near the rotation center axis Cg. The portion of the driven gear 62 near the rotation center axis Cg is a portion located around the rotary shaft 63. The drive-side end E1 of the link member 64 is connected to the driven gear 62 by the drive-side pin 64b, and thus is one end of the link member 64 that rotates as the driven gear 62 rotates.

The output-side pin 64c connects the output side of the link body 64a and the connecting member 65. The output-side pin 64c is connected to an output-side end E2 of the link body 64a. The output-side end E2 is a portion of the link body 64a located farther from the rotary shaft 63 than the drive-side pin 64b. The output-side end E2 is a portion located so as not to overlap the driven gear 62 when viewed from the Z1 direction. The output-side pin 64c is connected to a portion of the connecting member 65 on the Y2-direction side. The output-side end E2 of the link member 64 is the other end of the link member 64 that rotates with the rotation of the drive-side end E1 associated with the rotation of the driven gear 62.

In both the parking lock state and the parking lock released state, when viewed from the Z1 direction, the distance L1 between the rotation center axis Cg of the driven gear 62 and the drive-side end E1 of the link member 64 is smaller than the distance L2 between the rotation center axis Cg of the driven gear 62 and the output-side end E2 of the link member 64. Specifically, the distance L1 is the distance between the rotation center axis Cg of the driven gear 62 and the center point of the drive-side pin 64b when viewed from the Z1 direction. The distance L2 is the distance between the rotation center axis Cg of the driven gear 62 and the center point of the output-side pin 64c when viewed from the Z1 direction.

The relief portion 64d is curved to avoid interference with the rotary shaft 63. With respect to the rotation center axis Cg of the driven gear 62, the relief portion 64d is a recessed portion that is a portion of the link body 64a near the drive-side end E1 recessed in the direction opposite to the rotation center axis Cm of the motor 4. The relief portion 64d as the recessed portion avoids interference between the link member 64 and the rotary shaft 63 in the parking lock state.

Thus, the relief portion 64d is configured to avoid interference with the rotary shaft 63 in the parking lock state while the link member 64 travels between the parking lock state and the parking lock released state. That is, the relief portion 64d is curved to avoid interference with the rotary shaft 63 in the parking lock state while the link member 64 travels between the parking lock state and the parking lock released state.

The connecting member 65 connects the link member 64 and the parking rod 3. The connecting member 65 includes a first link 65a, a second link 65b, an output shaft 65c, and a rod-side pin 65d. The output shaft 65c is an example of a "second rotary shaft" in the claims.

The first link 65a is a plate-shaped member connecting the link member 64 and the second link 65b. One end of the first link 65a in the Y2 direction is connected to the link member 64. That is, one end of the first link 65a in the Y2 direction and the link member 64 are connected by the output-side pin 64c. The other end of the first link 65a in the Y1 direction is connected to the second link 65b. That is, the other end of the first link 65a in the Y1 direction and the second link 65b are connected by the output shaft 65c.

The second link 65b is a plate-shaped member connecting the first link 65a and the parking rod 3. One end of the second link 65b in the Y1 direction is connected to the parking rod 3. That is, one end of the second link 65b in the Y1 direction and the parking rod 3 are connected by the rod-side pin 65d. The other end of the second link 65b in the Y2 direction is connected to the first link 65a. That is, the other end of the second link 65b in the Y2 direction and the first link 65a are connected by the output shaft 65c.

The first link 65a and the second link 65b constitute a plate-shaped member having an L shape when viewed from the Z1 direction.

The output shaft 65c is configured to output torque transmitted from the motor 4 through the drive gear 61, the driven gear 62, and the link member 64 to the second link 65b connected to the parking rod 3. That is, the output shaft 65c connects the other end of the first link 65a in the Y1 direction and the other end of the second link 65b in the Y2 direction.

The output shaft 65c is a rotation center shaft extending along the Z direction for rotating the first link 65a and the second link 65b by torque from the motor 4. Specifically, the output shaft 65c is a spline shaft with protrusions formed to protrude in directions orthogonal to the Z direction.

Thus, the first link 65a and the second link 65b are engaged with each other in the circumferential direction around the center axis of the output shaft 65c by the output shaft 65c as the spline shaft. Consequently, the first link 65a and the second link 65b rotate together about the rotation center axis Cr of the output shaft 65c.

### <Stopper>

The stopper 66 is configured to prevent further rotation of the driven gear 62 due to an external force applied to the parking rod 3 in the parking lock released state. That is, the stopper 66 is configured to prevent rotation of the driven gear 62 when the parking rod 3 in the non-parking position P1 further moves (retracts) in the X1 direction due to an external force applied to the parking rod 3 in the parking lock released state.

Further, the stopper 66 is configured to prevent further rotation of the driven gear 62 due to an external force applied to the parking rod 3 in the parking lock state. That is, the stopper 66 is configured to prevent rotation of the driven gear 62 when the parking rod 3 in the parking position P2 further moves (advances) in the X2 direction due to an external force applied to the parking rod 3 in the parking lock state.

Specifically, the stopper 66 includes the engaging pin 66a and a slit 66b.

The engaging pin 66a extends from the case 5 in the Z1 direction. The engaging pin 66a has an end in the Z2 direction fixed to the case 5. Thus, the disposed position of the engaging pin 66a is fixed. The engaging pin 66a is slidably inserted into the slit 66b. The slit 66b is formed through the driven gear 62 in the Z2 direction. The slit 66b is formed in an arc shape along the circumferential direction around the rotation center axis Cg of the driven gear 62. The rotation center angle of the slit 66b is, for example, about 180 degrees. The slit 66b rotates as the driven gear 62 rotates.

Here, in both the parking lock state and the parking lock released state, further rotation of the driven gear 62 is restricted by engagement (abutment) between the inner surface of the X1-direction end of the arc-shaped slit 66b and the engaging pin 66a. That is, in the parking lock state, the arc-shaped slit 66b is disposed on the Y1-direction side of the driven gear 62. The inner surface of the X1-direction (one) end of the arc-shaped slit 66b disposed on the Y1-direction side is engaged with the engaging pin 66a. In the parking lock released state, the arc-shaped slit 66b is disposed on the Y2-direction side of the driven gear 62. The inner surface of the X1-direction (other) end of the arc-shaped slit 66b disposed on the Y2-direction side is engaged with the engaging pin 66a.

### <Reduction ratio>

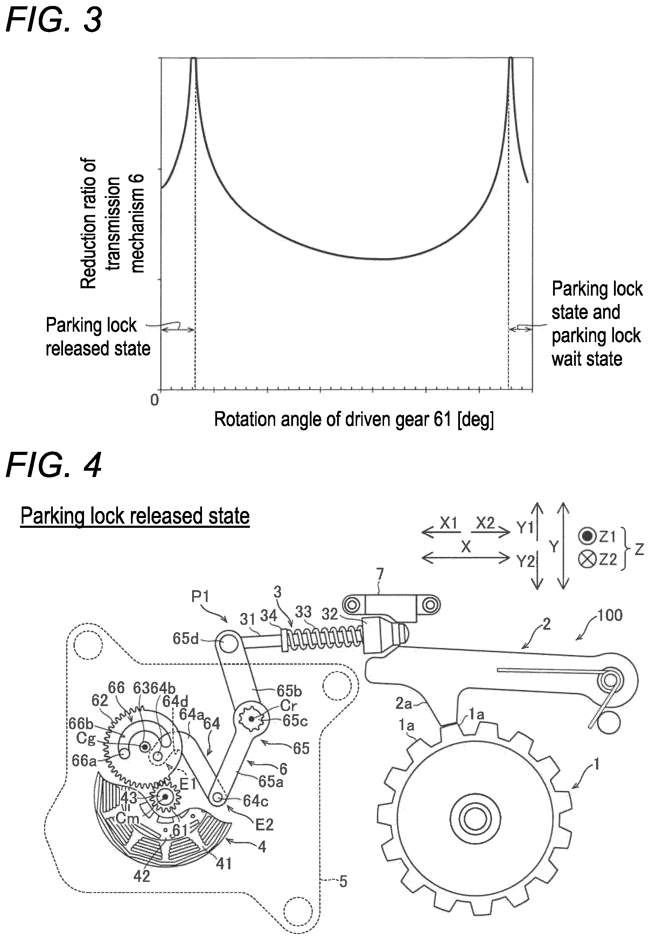

The transmission mechanism 6 has a function as a reduction mechanism to increase the torque of the motor 4 and transmit the increased torque to the parking rod 3 through the output shaft 65c. That is, by arranging the transmission mechanism 6 in a layout as shown in FIGS. 1 and 2, the reduction ratio of the transmission mechanism 6 changes as shown in FIG 3. In FIG 3, the reduction ratio of the transmission mechanism 6 is shown in relation to changes in the rotation angle of the driven gear 62. The reduction ratio of the transmission mechanism 6 is obtained based on the multiplication of a reduction ratio based on the ratio between the number of the teeth of the drive gear 61 and the number of the teeth of the driven gear 62, and a reduction ratio based on the ratio between the rotation angle of the rotary shaft 63 and the rotation angle of the output shaft 65c.

Here, the layout of the transmission mechanism 6 indicates the disposition, dimensions, and the like of each of the drive gear 61, the driven gear 62, the rotary shaft 63, the link member 64, the connecting member 65, and the stopper 66 when the transmission mechanism 6 is viewed from the Z1 direction. Specifically, the layout of the transmission mechanism 6 includes elements such as the length of the link member 64, the disposed position of the link member 64, the connection position between the link member 64 and the driven gear 62, the connection position between the link member 64 and the first link 65a, the length of the first link 65a, the disposed position of the first link 65a, the connection position between the first link 65a and the second link 65b, the angle of the second link 65b with respect to the first link 65a, the length of the second link 65b, and the disposed position of the second link 65b.

By adjusting the above-described elements, the transmission mechanism 6 functions as a reduction mechanism to reduce speed such that while the parking lock released state of the vehicle is switched to either the parking lock state or a parking lock wait state of the vehicle, the reduction ratio of the transmission mechanism 6 decreases from the maximum reduction ratio to the minimum reduction ratio, and the reduction ratio of the transmission mechanism 6 increases from the minimum reduction ratio to the maximum reduction ratio. That is, the transmission mechanism 6 functions as a reduction mechanism to reduce speed such that while the parking rod 3 travels from the non-parking position P1 to the parking position P2, the reduction ratio of the transmission mechanism 6 decreases from the maximum reduction ratio to the minimum reduction ratio, and the reduction ratio of the transmission mechanism 6 increases from the minimum reduction ratio to the maximum reduction ratio.

### <Dead center of transmission mechanism>

The vehicle parking device 100 achieves a structure that prevents the link member 64 from moving due to an external force applied to the parking rod 3 in both the parking lock state and the parking lock released state.

That is, the parking rod 3 in the non-parking position P1 as shown in FIG 1 may be unintentionally moved to the parking position P2 by an external force caused by vibration of the vehicle or the like. In this case, the traveling of the vehicle will be unintentionally braked. Further, the parking rod 3 in the parking position P2 as shown in FIG 2 may be unintentionally moved to the non-parking position P1 by an external force caused by vibration of the vehicle or the like. In this case, the stopped vehicle will unintentionally move.

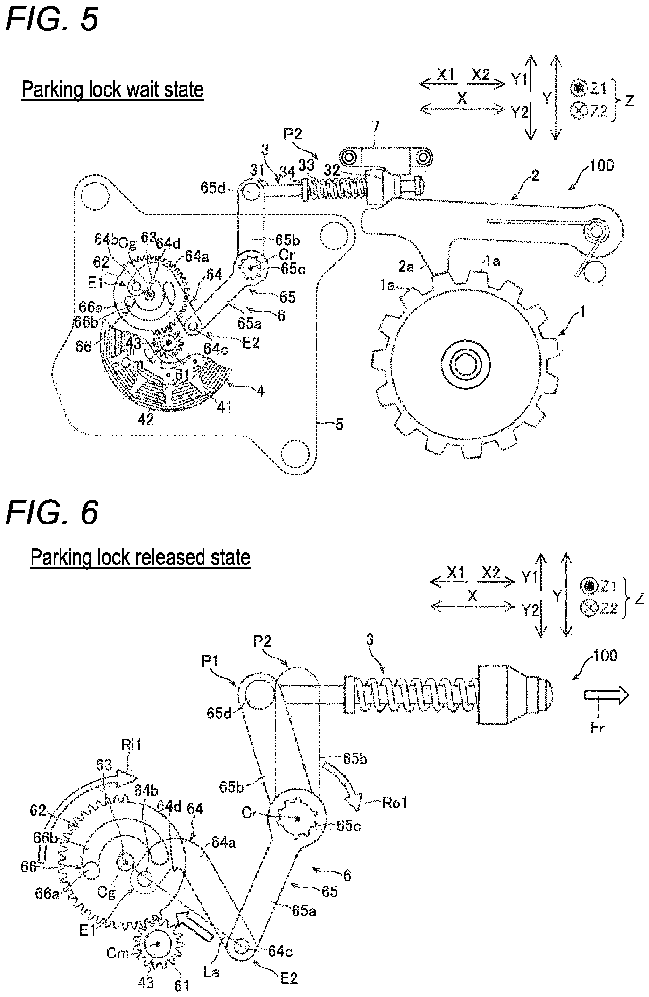

As shown in FIGS. 4 and 5, when the locking claw 2a of the parking pawl 2 and a groove between the teeth 1a of the parking gear 1 do not face each other, and the locking claw 2a of the parking pawl 2 and one of the teeth 1a of the parking gear 1 face each other, an external force caused by the retraction spring 33 as well as an external force caused by vibration of the vehicle or the like are applied to the parking rod 3. Consequently, in this case, unintentional movement of the parking rod 3 is more likely to occur.

Here, an external force caused by the retraction spring 33 will be described in detail below.

As shown in FIG 4, in a case where the locking claw 2a of the parking pawl 2 and one of the teeth 1a of the parking gear 1 face each other, when the parking rod 3 moves in the X2 direction toward the parking position P2, as shown in FIG 5, the parking rod 3 with the retraction spring 33 compressed presses the parking pawl 2 in the Y2 direction. Consequently, the locking claw 2a of the parking pawl 2 presses the tooth 1a of the parking gear 1. Then, in the vehicle, the parking gear 1 rotates as the wheel of the vehicle rotates. Consequently, the tooth 1a of the parking gear 1 shifts position, and the cam 32 further presses the parking pawl 2 in the Y2 direction due to the elastic deformation of the compressed retraction spring 33, so that the locking claw 2a of the parking pawl 2 and the teeth 1a of the parking gear 1 mesh with each other.

At the parking rod 3 with the retraction spring 33 compressed as shown in FIG 5, a reaction force in the X1 direction is applied to the support 34 against the pressing force of the compressed retraction spring 33 pressing the cam 32 in the X2 direction. The reaction force in the X1 direction applied to the support 34 is an external force that moves the parking rod 3 in the parking position P2 to the non-parking position P1. Thus, when the parking rod 3 has moved to the parking position P2 with the retraction spring 33 compressed, an external force caused by the retraction spring 33 as well as an external force caused by vibration of the vehicle or the like are applied to the parking rod 3.

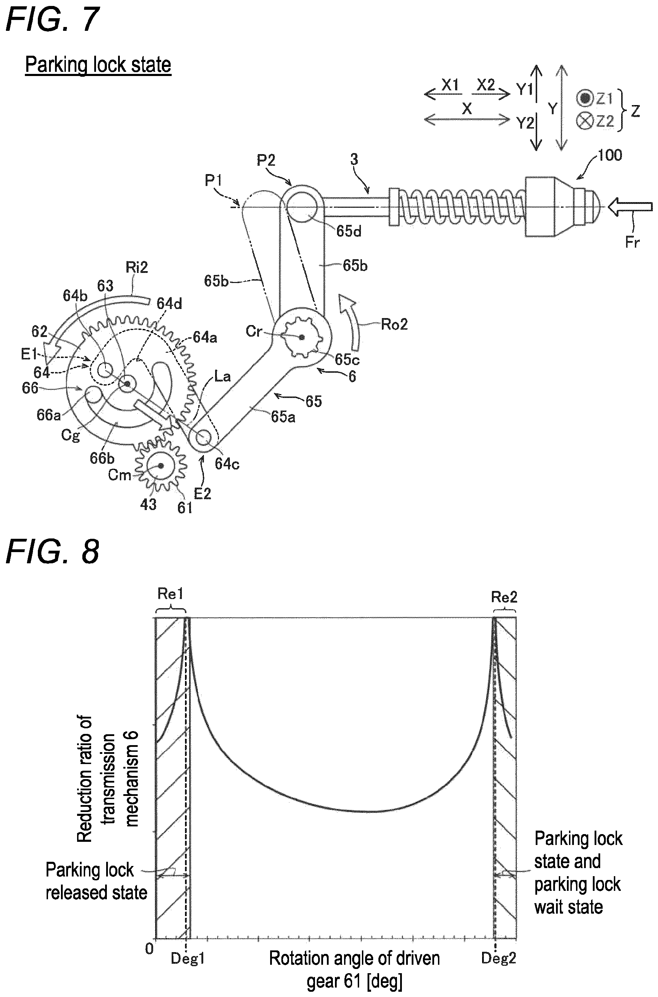

Therefore, as shown in FIGS. 6 and 7, the vehicle parking device 100 of the first embodiment is configured such that the link member 64 is in a dead center position in both the parking lock state and the parking lock released state. Here, the link member 64 being in the dead center position means the link member 64 being in the position in which torque for the link member 64 to move is not produced (the link member 64 does not move) even when the above-described external forces are applied to the parking rod 3.

That is, in the vehicle parking device 100, the link member 64 in the dead center position in the parking lock state prevents the parking rod 3 in the parking position P2 from unintentionally moving to the non-parking position P1. In the vehicle parking device 100, the link member 64 in the dead center position in the parking lock released state prevents the parking rod 3 in the non-parking position P1 from unintentionally moving to the parking position P2. Thus, in the vehicle parking device 100, unintentional movement of the parking rod 3 is prevented by the mechanical structure without using the driving force of the motor 4.

Specifically, the rotation center axis Cg of the driven gear 62, the drive-side end E1 of the link member 64, and the output-side end E2 of the link member 64 are aligned in both the parking lock state and the parking lock released state when viewed from the Z1 direction (one side in the extending direction of the rotation center axis Cg of the driven gear 62).

That is, as shown in FIG 6, in the parking lock released state, when viewed from the Z1 direction (one side in the extending direction of the rotation center axis Cg of the driven gear 62), the rotation center axis Cg of the driven gear 62, the drive-side end E1 of the link member 64 disposed on the output-side end E2 side with respect to the rotation center axis Cg of the driven gear 62, and the output-side end E2 of the link member 64 are aligned. Here, in the parking lock released state, when viewed from the Z1 direction, the rotation center axis Cg of the rotary shaft 63 of the driven gear 62, the center point of the drive-side pin 64b of the link member 64 disposed on the X2-direction side with respect to the rotation center axis Cg of the driven gear 62, and the center point of the output-side pin 64c of the link member 64 are arranged in a straight line La. Thus, the rotation center axis Cg of the rotary shaft 63 of the driven gear 62 is disposed in the straight line La connecting the center point of the drive-side pin 64b of the link member 64 and the center point of the drive-side pin 64b of the link member 64, so that the link member 64 is in a first dead center. In the first dead center, interference with the rotary shaft 63 is avoided.

As shown in FIG 7, in the parking lock state, when viewed from the Z1 direction (when viewed from one side in the extending direction of the rotation center axis Cg of the driven gear 62), the rotation center axis Cg of the driven gear 62, the drive-side end E1 of the link member 64 disposed opposite the output-side end E2 with respect to the rotation center axis Cg of the driven gear 62, and the output-side end E2 of the link member 64 are aligned. Here, in the parking lock state, when viewed from the Z1 direction, the rotation center axis Cg of the rotary shaft 63 of the driven gear 62, the center point of the drive-side pin 64b of the link member 64 disposed on the X1-direction side with respect to the rotation center axis Cg of the driven gear 62, and the center point of the output-side pin 64c of the link member 64 are arranged in a straight line La. Thus, the rotation center axis Cg of the rotary shaft 63 of the driven gear 62 is disposed in the straight line La connecting the center point of the drive-side pin 64b of the link member 64 and the center point of the drive-side pin 64b of the link member 64, so that the link member 64 is in a second dead center. In the second dead center, the relief portion 64d avoids interference with the rotary shaft 63.

### <Rotation restriction ranges provided by stopper and first dead center and second dead center of link member>

Here, as shown in FIGS. 6 and 8, when the rotation angle of the driven gear 62 is a first rotation angle Deg1 with the parking rod 3 having moved to the non-parking position P1, the rotation of the driven gear 62 is restricted to a first restriction range Re1 (indicated by right diagonal hatching in FIG 8) by the stopper 66 and the link member 64 in the first dead center.

Specifically, in the parking lock released state, the stopper 66 prevents further rotation of the driven gear 62, and the link member 64 with the drive-side end E1 and the output-side end E2 aligned with the rotation center axis Cg of the driven gear 62 prevents rotation of the driven gear 62 that returns the parking rod 3 to the parking position P2 (indicated by a dash-dot-dot line in FIG 6). That is, the stopper 66 prevents rotation of the driven gear 62 in an Ri1 direction in which the rotation angle of the driven gear 62 changes from the first rotation angle Deg1 to zero degrees. Thus, the stopper 66 sets the lower limit of the first restriction range Re1. Even when a reverse input Fr caused by an external force is applied to the parking rod 3, causing torque in an Ro1 direction on the output shaft 65c, the torque is not transmitted to the driven gear 62 by the link member 64 in the first dead center. Consequently, the driven gear 62 does not rotate in an Ri2 direction (see FIG 7) in which the rotation angle of the driven gear 62 increases from the first rotation angle Deg1. Thus, the link member 64 in the first dead center sets the upper limit of the first restriction range Re1.

As shown in FIGS. 7 and 8, when the rotation angle of the driven gear 62 is a second rotation angle Deg2 with the parking rod 3 having moved to the parking position P2, the rotation of the driven gear 62 is restricted to a second restriction range Re2 (indicated by left diagonal hatching in FIG 8) by the stopper 66 and the link member 64 in the second dead center.

Specifically, in the parking lock state, the stopper 66 prevents further rotation of the driven gear 62, and the link member 64 with the drive-side end E1 and the output-side end E2 aligned with the rotation center axis Cg of the driven gear 62 prevents rotation of the driven gear 62 that returns the parking rod 3 to the non-parking position P1 (indicated by a dash-dot-dot line in FIG 7). That is, the stopper 66 prevents rotation of the driven gear 62 in the Ri2 direction in which the rotation angle of the driven gear 62 increases from the second rotation angle Deg2. Thus, the stopper 66 sets the upper limit of the second restriction range Re2. Even when a reverse input Fr caused by an external force is applied to the parking rod 3, causing torque in an Ro2 direction on the output shaft 65c, the torque is not transmitted to the driven gear 62 by the link member 64 in the second dead center. Consequently, the driven gear 62 does not rotate in the Ri1 direction (see FIG 6) in which the rotation angle of the driven gear 62 decreases from the second rotation angle Deg2. Thus, the link member 64 in the second dead center sets the lower limit of the second restriction range Re2.

### (Effects of first embodiment)

The first embodiment can provide the following effects.

In the first embodiment, as described above, the link member 64 includes the relief portion 64d to avoid interference with the rotary shaft 63 while the link member 64 travels between the parking lock state and the parking lock released state. Consequently, in the parking lock state during travel between the parking lock state and the parking lock released state, the link member 64 is disposed in the position where the relief portion 64d avoids interference with the rotary shaft 63, so that even when the parking rod 3 tries to move by an external force, the link member 64 can block torque caused by the external force. In the parking lock released state during travel between the parking lock state and the parking lock released state, the link member 64 is disposed in the position to avoid interference with the rotary shaft 63, so that even when the parking rod 3 tries to move by an external force, the link member 64 can block torque caused by the external force. These can achieve a structure that prevents the link member 64 from moving even when an external force is applied to the parking rod 3 in both the parking lock state and the parking lock released state. When the link member 64 moves forward or backward as the driven gear 62 rotates to switch to either the parking lock released state or the parking lock released state, the relief portion 64d can prevent interference between the driven gear 62 and the link member 64.

In the first embodiment, as described above, the relief portion 64d is curved to avoid interference with the rotary shaft while the link member 64 travels between the parking lock state and the parking lock released state. Thus, the structure of the relief portion 64d to avoid interference between the driven gear 62 and the link member 64 can be achieved by a simple structure, so that the structure of the link member 64 can be prevented from being complicated.

In the first embodiment, as described above, the rotation center axis Cg of the driven gear 62, the drive-side end E1 of the link member 64, and the output-side end E2 of the link member 64 are aligned in the parking lock state when viewed from the Z1 direction (one side in the extending direction of the rotation center axis Cg of the driven gear 62). Thus, in the parking lock state, the link member 64 with the drive-side end E1 and the output-side end E2 aligned with the rotation center axis Cg of the driven gear 62 is in the dead center position where torque is not transmitted. Consequently, even when the parking rod 3 tries to move by an external force, torque caused by the external force is blocked by the link member 64 in the dead center. Therefore, the structure in which the link member 64 does not move in the dead center position in the link mechanism in the parking lock state even when an external force is applied to the parking rod 3 eliminates the need to provide a sensor for detecting the movement of the parking rod 3 due to an external force, to drive the motor 4 to prevent the driven gear 62 from moving, based on a detection signal of the sensor. As a result, it is not necessary to supply power to the sensor and the motor 4 in the parking lock state, so that the power consumption of the vehicle parking device 100 can be reduced.

In the first embodiment, as described above, when viewed from the Z1 direction (one side in the extending direction of the rotation center axis Cg of the driven gear 62), the rotation center axis Cg of the driven gear 62, the drive-side end E1 of the link member 64 disposed opposite the output-side end E2 with respect to the rotation center axis Cg of the driven gear 62, and the output-side end E2 of the link member 64 are aligned. Thus, by disposing the drive-side end E1 of the link member 64 on the output-side end E2 side opposite the output-side end E2 with respect to the rotation center axis Cg of the driven gear 62 in the parking lock state, a structure can be achieved in which the link member 64 does not move in the dead center position even when an external force is applied to the parking rod 3. As a result, it is possible to prevent an increase in the amount of travel of the link member 64 to achieve a structure in which the link member 64 does not move in the dead center position in the link mechanism.

In the first embodiment, as described above, the rotation center axis Cg of the driven gear 62, the drive-side end E1 of the link member 64, and the output-side end E2 of the link member 64 are aligned in the parking lock released state when viewed from the Z1 direction (one side in the extending direction of the rotation center axis Cg of the driven gear 62). Thus, in the parking lock released state, the link member 64 with the drive-side end E1 and the output-side end E2 aligned with the rotation center axis Cg of the driven gear 62 is in the dead center position where torque is not transmitted. Consequently, even when the parking rod 3 tries to move by an external force, torque caused by the external force is blocked by the link member 64 in the dead center. Therefore, the structure in which the link member 64 does not move in the dead center position in the link mechanism in the parking lock released state even when an external force is applied to the parking rod 3 eliminates the need to provide a sensor for detecting the movement of the parking rod 3 due to an external force, to drive the motor 4 to prevent the driven gear 62 from moving, based on a detection signal of the sensor. As a result, it is not necessary to supply power to the sensor and the motor 4 in the parking lock released state, so that the power consumption of the vehicle parking device 100 can be reduced.

In the first embodiment, as described above, when viewed from the Z1 direction (one side in the extending direction of the rotation center axis Cg of the driven gear 62), the rotation center axis Cg of the driven gear 62, the drive-side end E1 of the link member 64 disposed on the output-side end E2 side with respect to the rotation center axis Cg of the driven gear 62, and the output-side end E2 of the link member 64 are aligned. Thus, by disposing the drive-side end E1 of the link member 64 on the output-side end E2 side with respect to the rotation center axis Cg of the driven gear 62 in the parking lock released state, a structure can be achieved in which the link member 64 does not move in the dead center position even when an external force is applied to the parking rod 3. As a result, it is possible to prevent an increase in the amount of travel of the link member 64 to achieve a structure in which the link member 64 does not move in the dead center position in the link mechanism.

In the first embodiment, as described above, the transmission mechanism 6 includes the stopper 66 that prevents further rotation of the driven gear 62 due to an external force applied to the parking rod 3 in the parking lock released state, and prevents further rotation of the driven gear 62 due to an external force applied to the parking rod 3 in the parking lock state. In the parking lock released state, the stopper 66 prevents further rotation of the driven gear 62, and the link member 64 with the drive-side end E1 and the output-side end E2 aligned with the rotation center axis Cg of the driven gear 62 prevents rotation of the driven gear 62 that returns the parking rod 3 to the parking position P2. Further, in the parking lock state, the stopper 66 prevents further rotation of the driven gear 62, and the link member 64 with the drive-side end E1 and the output-side end E2 aligned with the rotation center axis Cg of the driven gear 62 prevents rotation of the driven gear 62 that returns the parking rod 3 to the non-parking position P1. Thus, the stopper 66 prevents further rotation of the driven gear 62, and the structure in which the link member 64 does not move in the dead center position prevents rotation of the driven gear 62 that returns the driven gear 62 to the other shift position (the parking position P2 or the non-parking position P1). Consequently, in each of the parking lock state and the parking lock released state, the rotation of the driven gear 62 can be prevented in the range between the rotation angle at which the stopper 66 prevents rotation of the driven gear 62 and the rotation angle at which the structure in which the link member 64 does not move in the dead center position in the link mechanism prevents rotation of the driven gear 62. As a result, it is possible to achieve a structure that prevents rotation of the driven gear 62 more reliably in each of the parking lock state and the parking lock released state.

In the first embodiment, as described above, the transmission mechanism 6 includes the connecting member 65 connecting the link member 64 and the parking rod 3. The connecting member 65 includes the output shaft 65c disposed at the position of the rotation center of the connecting member 65. The connecting member 65 is configured to rotate about the rotation center axis Cr passing through the rotation center of the output shaft 65c. Consequently, by the link member 64 traveling between the parking lock state and the parking lock released state, the connecting member 65 can be rotated around the output shaft 65c, and thus can cause the parking rod 3 to travel between the parking position P2 and the non-parking position P1.

### [Second embodiment]

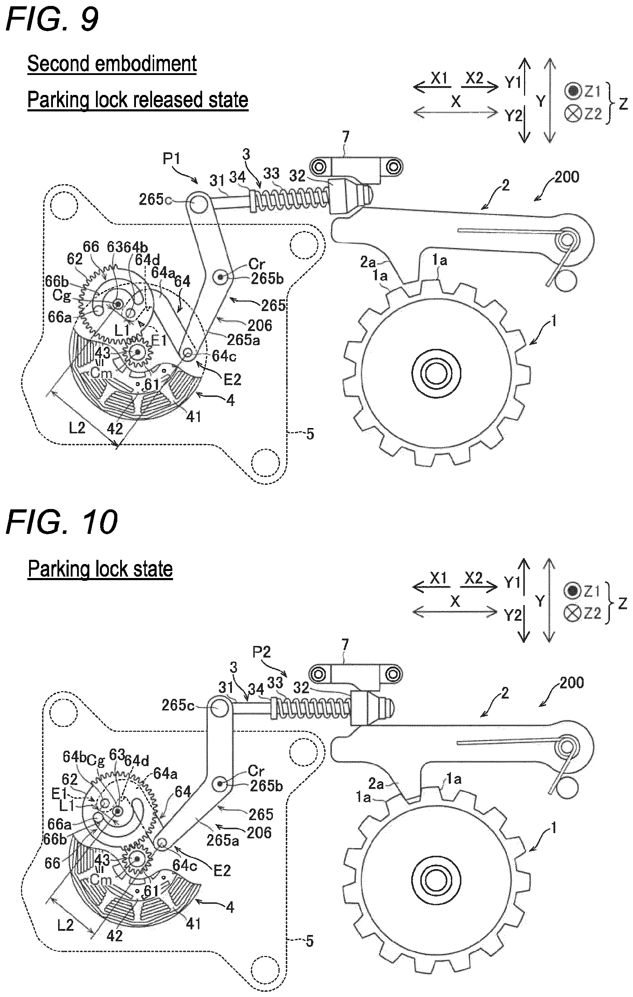

A configuration of a vehicle parking device 200 according to a second embodiment will be described with reference to FIGS. 9 to 12. In the second embodiment, the vehicle parking device 200 includes a lever 265a. In the second embodiment, the same configuration as that of the first embodiment will not be described in detail.

The configuration of the vehicle parking device 200 according to the second embodiment of the present invention will be described with reference to FIGS. 9 to 12.

The vehicle parking device 200 includes the parking gear 1, the parking pawl 2, the parking rod 3, the motor 4, the case 5, and a transmission mechanism 206.

A direction in which the rotation center axis Cm of the motor 4 extends is defined as the Z direction. The Z direction toward one side is defined as the Z1 direction, and the Z direction toward the opposite side is defined as the Z2 direction. A direction in which the motor 4 and the parking gear 1 are aligned is defined as the X direction. The X direction toward the motor 4 is defined as the X1 direction, and the X direction toward the parking gear 1 in defined as the X2 direction. A direction in which the parking gear 1 and the parking pawl 2 are aligned is defined as the Y direction. The Y direction toward the parking pawl 2 is defined as the Y1 direction, and the Y direction toward the parking gear 1 is defined as the Y2 direction. The X direction is orthogonal to the Y direction. The Z direction is orthogonal to the X direction and the Y direction.

### (Transmission mechanism)

As shown in FIGS. 9 and 10, the transmission mechanism 6 is configured to transmit the driving force of the motor 4 to the parking rod 3. The input side of the transmission mechanism 6 is connected to the motor 4. The output side of the transmission mechanism 6 is connected to the parking rod 3.

Specifically, the transmission mechanism 6 includes the drive gear 61, the driven gear 62, the rotary shaft 63, the link member 64, a connecting member 265, and the stopper 66. The rotary shaft 63 is an example of the "first rotary shaft" in the claims.

The connecting member 265 connects the link member 64 and the parking rod 3. The connecting member 265 includes the lever 265a, a rotary shaft 265b, and a rod-side pin 265c. The rotary shaft 265b is an example of the "second rotary shaft" in the claims.

The lever 265a is an L-shaped plate-shaped member connecting the link member 64 and the parking rod 3. One end of the lever 265a in the Y2 direction is connected to the link member 64. That is, one end of the lever 265a in the Y2 direction and the link member 64 are connected by the output-side pin 64c. The other end of the lever 265a in the Y1 direction is connected to the parking rod 3. That is, the other end of the lever 265a in the Y1 direction and the parking rod 3 are connected by the rod-side pin 265c.

The rotary shaft 265b is a rotation center shaft extending along the Z direction for rotating the lever 265a by torque from the motor 4. The rotary shaft 265b is disposed at the position of the rotation center of the lever 265a. The lever 265a is configured to rotate about the rotation center axis Cr passing through the rotation center of the rotary shaft 265b.

The rod-side pin 265c is configured to output torque transmitted from the motor 4 through the drive gear 61, the driven gear 62, the link member 64, and the lever 265a to the parking rod 3. That is, the rod-side pin 265c connects the other end of the lever 265a in the Y1 direction and one end of the parking rod 3 in the X1 direction.

### <Dead center of transmission mechanism>

The vehicle parking device 200 achieves a structure that prevents the link member 64 from moving due to an external force applied to the parking rod 3 in both the parking lock state and the parking lock released state.

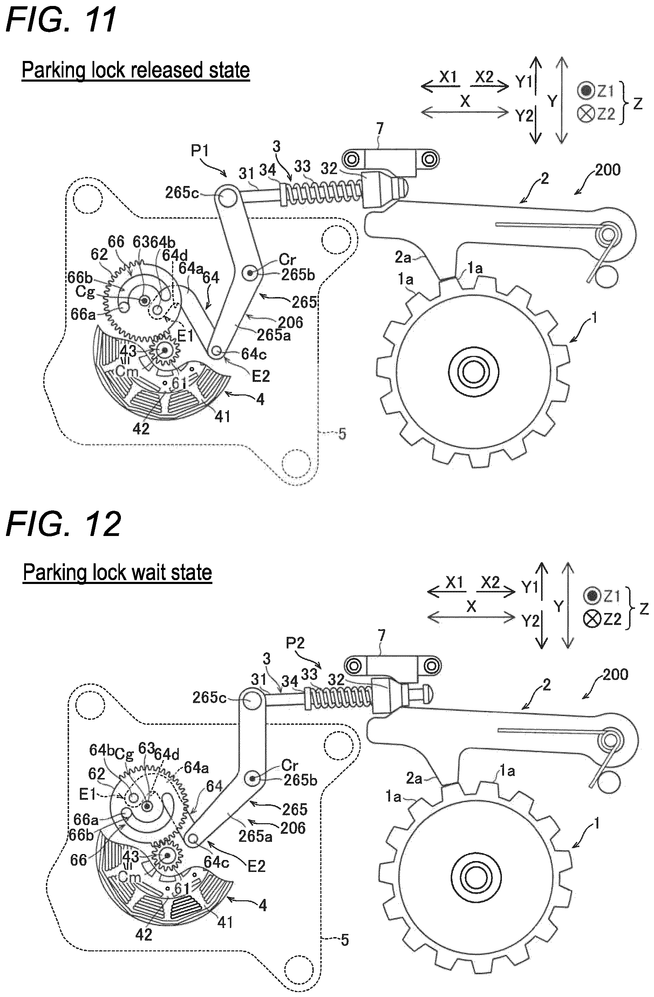

That is, in the vehicle parking device 200, as in the vehicle parking device 100 of the first embodiment, the parking rod 3 in the non-parking position P1 as shown in FIG 9 may be unintentionally moved to the parking position P2 due to an external force caused by vibration of the vehicle or the like. Further, the parking rod 3 in the parking position P2 as shown in FIG 10 may be unintentionally moved to the non-parking position P1 due to an external force caused by vibration of the vehicle or the like. For the parking rod 3 in the parking position P2 as shown in FIGS. 11 and 12, when the locking claw 2a of the parking pawl 2 and a groove between the teeth 1a of the parking gear 1 do not face each other, and the locking claw 2a of the parking pawl 2 and one of the teeth 1a of the parking gear 1 face each other, an external force caused by the retraction spring 33 as well as an external force caused by vibration of the vehicle or the like are applied to the parking rod 3, so that the parking rod 3 may be unintentionally moved to the non-parking position P1.

Therefore, as shown in FIGS. 9 to 12, in the vehicle parking device 200 of the second embodiment, the link member 64 is configured to be in a dead center position in both the parking lock state and the parking lock released state. Specifically, the rotation center axis Cg of the driven gear 62, the drive-side end E1 of the link member 64, and the output-side end E2 of the link member 64 are aligned in both the parking lock state and the parking lock released state when viewed from the Z1 direction (one side in the extending direction of the rotation center axis Cg of the driven gear 62). The other configuration of the second embodiment is the same as that of the first embodiment.

### (Effects of second embodiment)

The second embodiment can provide the following effects.

In the second embodiment, as in the first embodiment, the link member 64 includes the relief portion 64d to avoid interference with the rotary shaft 63 while the link member 64 travels between the parking lock state and the parking lock released state. This can achieve a structure that prevents the link member 64 from moving even when an external force is applied to the parking rod 3 in both the parking lock state and the parking lock released state.

In the second embodiment, as described above, the transmission mechanism 206 includes the connecting member 265 connecting the link member 64 and the parking rod 3. The connecting member 265 includes the rotary shaft 265b disposed at the position of the rotation center of the connecting member 265. The connecting member 65 is configured to rotate about the rotation center axis Cr passing through the rotation center of the rotary shaft 265b. Consequently, by the link member 64 traveling between the parking lock state and the parking lock released state, the connecting member 265 can be rotated around the rotary shaft 265b, and thus can cause the parking rod 3 to travel between the parking position P2 and the non-parking position P1. The other effects of the second embodiment are the same as the effects of the first embodiment, and thus the description thereof will be omitted.

### [Modifications]

The embodiments disclosed herein should be considered illustrative in all respects and not limiting. The scope of the present invention is defined not by the description of the above embodiments but by the claims, and further includes all changes (modifications) within meaning and scope equivalent to those of the claims.

For example, the first and second embodiments have described an example in which the vehicle is an electric vehicle, but the present invention is not limited thereto. In the present invention, the vehicle may be a hybrid vehicle including an engine and a motor.

The first and second embodiments have described an example in which the vehicle parking device 100 (200) includes the parking gear 1, the parking pawl 2, the parking rod 3, the motor 4, the case 5, and the transmission mechanism 6, but the present invention is not limited thereto. In the present invention, the vehicle parking device may include the parking gear, the parking pawl, the parking rod, the motor, the case, the transmission mechanism, a detent spring, and a detent plate with grooves formed in one-to-one correspondence with the parking position and the non-parking position.

The first and second embodiments have described an example in which the link body 64a is a J-shaped plate-shaped member with the curved relief portion 64d when viewed from the Z1 direction, but the present invention is not limited thereto. In the present invention, the link body may be an L-shaped plate-shaped member with a bent relief portion when viewed from one side in the extending direction of the rotation center axis of the driven gear.

### [Summary of present embodiment]

The present embodiment has at least the following configuration.

The vehicle parking device 100 (200) includes the motor (4) that generates a driving force for switching between the parking lock state and the parking lock released state of the vehicle, the transmission mechanism 6 (206) connected to the motor (4) to transmit the driving force of the motor (4), and the parking rod (3) connected to the transmission mechanism 6 (206) to travel between the parking position (P2) corresponding to the parking lock state and the non-parking position (P1) corresponding to the parking lock released state. The transmission mechanism 6 (206) includes the driven gear (62) that rotates about the rotation center axis (Cg) by the driving force from the motor (4), the link member (64) including the drive-side end (E1) connected to the driven gear (62) to rotate as the driven gear (62) rotates, and the output-side end (E2) that is the other end and rotates as the drive-side end (E1) rotates, and the first rotary shaft (63) disposed on the rotation center axis (Cg) of the driven gear (62). The link member (64) includes the relief portion (64d) that avoids interference with the first rotary shaft (63) while the link member (64) travels between the parking lock state and the parking lock released state.

With this configuration, in the parking lock state during travel between the parking lock state and the parking lock released state, the link member (64) is disposed in a position where the relief portion (64d) avoids interference with the first rotary shaft (63), so that even when the parking rod (3) tries to move by an external force, the link member (64) can block torque caused by the external force. In the parking lock released state during travel between the parking lock state and the parking lock released state, the link member (64) is disposed in a position to avoid interference with the first rotary shaft (63), so that even when the parking rod (3) tries to move by an external force, the link member (64) can block torque caused by the external force. These can achieve a structure that prevents the link member (64) from moving even when an external force is applied to the parking rod (3) in both the parking lock state and the parking lock released state. When the link member (64) moves forward or backward as the driven gear (62) rotates to switch to either the parking lock released state or the parking lock released state, the relief portion (64d) can prevent interference between the driven gear (62) and the link member (64).

The relief portion (64d) is bent or curved to avoid interference with the rotary shaft while the link member (64) travels between the parking lock state and the parking lock released state.

With this configuration, the structure of the relief portion (64d) to avoid interference between the driven gear (62) and the link member (64) can be achieved by a simple structure, so that the structure of the link member (64) can be prevented from being complicated.

The rotation center axis (Cg) of the driven gear (62), the drive-side end (E1) of the link member (64), and the output-side end (E2) of the link member (64) are aligned in the parking lock state when viewed from one side in the extending direction of the rotation center axis (Cg) of the driven gear (62).

With this configuration, in the parking lock state, the link member (64) with the drive-side end (E1) and the output-side end (E2) aligned with the rotation center axis (Cg) of the driven gear (62) is in a dead center position where torque is not transmitted. Thus, even when the parking rod (3) tries to move by an external force, torque caused by the external force is blocked by the link member (64) in the dead center. Consequently, the structure in which the link member (64) does not move in the dead center position in the link mechanism in the parking lock state even when an external force is applied to the parking rod (3) eliminates the need to provide a sensor for detecting the movement of the parking rod (3) due to an external force, to drive the motor (4) to prevent the driven gear (62) from moving, based on a detection signal of the sensor. As a result, it is not necessary to supply power to the sensor and the motor (4) in the parking lock state, so that the power consumption of the vehicle parking device 100 (200) can be reduced.

When viewed from one side in the extending direction of the rotation center axis (Cg) of the driven gear (62), the rotation center axis (Cg) of the driven gear (62), the drive-side end (E1) of the link member (64) disposed opposite the output-side end (E2) with respect to the rotation center axis (Cg) of the driven gear (62), and the output-side end (E2) of the link member (64) are aligned.

With this configuration, by disposing the drive-side end (E1) of the link member (64) on the output-side end (E2) side opposite the output-side end (E2) with respect to the rotation center axis (Cg) of the driven gear (62) in the parking lock state, a structure can be achieved in which the link member (64) does not move in the dead center position even when an external force is applied to the parking rod (3). As a result, it is possible to prevent an increase in the amount of travel of the link member (64) to achieve a structure in which the link member (64) does not move in the dead center position in the link mechanism.

The rotation center axis (Cg) of the driven gear (62), the drive-side end (E1) of the link member (64), and the output-side end (E2) of the link member (64) are aligned in the parking lock released state when viewed from one side in the extending direction of the rotation center axis (Cg) of the driven gear (62).

With this configuration, in the parking lock released state, the link member (64) with the drive-side end (E1) and the output-side end (E2) aligned with the rotation center axis (Cg) of the driven gear (62) is in the dead center position where torque is not transmitted. Thus, even when the parking rod (3) tries to move by an external force, torque caused by the external force is blocked by the link member (64) in the dead center. Consequently, the structure in which the link member (64) does not move in the dead center position in the link mechanism in the parking lock released state even when an external force is applied to the parking rod (3) eliminates the need to provide a sensor for detecting the movement of the parking rod (3) due to an external force, to drive the motor (4) to prevent the driven gear (62) from moving, based on a detection signal of the sensor. As a result, it is not necessary to supply power to the sensor and the motor (4) in the parking lock released state, so that the power consumption of the vehicle parking device 100 (200) can be reduced.

When viewed from one side in the extending direction of the rotation center axis (Cg) of the driven gear (62), the rotation center axis (Cg) of the driven gear (62), the drive-side end (E1) of the link member (64) disposed on the output-side end (E2) side with respect to the rotation center axis (Cg) of the driven gear (62), and the output-side end (E2) of the link member (64) are aligned.

With this configuration, by disposing the drive-side end (E1) of the link member (64) on the output-side end (E2) side with respect to the rotation center axis (Cg) of the driven gear (62) in the parking lock released state, a structure can be achieved in which the link member (64) does not move in the dead center position even when an external force is applied to the parking rod (3). As a result, it is possible to prevent an increase in the amount of travel of the link member (64) to achieve a structure in which the link member (64) does not move in the dead center position in the link mechanism.

The transmission mechanism 6 (206) further includes the stopper (66) that prevents further rotation of the driven gear (62) due to an external force applied to the parking rod (3) in the parking lock released state, and prevents further rotation of the driven gear (62) due to an external force applied to the parking rod (3) in the parking lock state. In the parking lock released state, the stopper (66) prevents further rotation of the driven gear (62), and the link member (64) with the drive-side end (E1) and the output-side end (E2) aligned with the rotation center axis (Cg) of the driven gear (62) prevents rotation of the driven gear (62) that returns the parking rod (3) to the parking position (P2). In the parking lock state, the stopper (66) prevents further rotation of the driven gear (62), and the link member (64) with the drive-side end (E1) and the output-side end (E2) aligned with the rotation center axis (Cg) of the driven gear (62) prevents rotation of the driven gear (62) that returns the parking rod (3) to the non-parking position (P1).

With this configuration, the stopper (66) prevents further rotation of the driven gear (62), and the structure in which the link member (64) does not move in the dead center position prevents rotation of the driven gear (62) that returns the driven gear (62) to the other shift position (the parking position (P2) or the non-parking position (P1)). Consequently, in each of the parking lock state and the parking lock released state, the rotation of the driven gear (62) can be prevented in the range between the rotation angle at which the stopper (66) prevents rotation of the driven gear (62) and the rotation angle at which the structure in which the link member (64) does not move in the dead center position in the link mechanism prevents rotation of the driven gear (62). As a result, it is possible to achieve a structure that prevents rotation of the driven gear (62) more reliably in each of the parking lock state and the parking lock released state.

The transmission mechanism 6 (206) further includes the connecting member 65 (265) connecting the link member (64) and the parking rod (3). The connecting member 65 (265) includes the second rotary shaft 65c (265b) disposed at the position of the rotation center of the connecting member 65 (265). The connecting member 65 (265) is configured to rotate about the rotation center axis (Cr) passing through the rotation center of the second rotary shaft 65c (265b).

With this configuration, by the link member (64) traveling between the parking lock state and the parking lock released state, the connecting member 65 (265) can be rotated around the second rotary shaft 65c (265b), and thus can cause the parking rod (3) to travel between the parking position (P2) and the non-parking position (P1).

### REFERENCE SIGNS LIST

3: Parking rod, 4: Motor, 6, 206: Transmission mechanism, 62: Driven gear, 63: Rotary shaft (first rotary shaft), 64: Link member, 64d: Relief portion, 65, 265: Connecting member, 65c: Output shaft (second rotary shaft), 66: Stopper, 100, 200: Vehicle parking device, 265b: Rotary shaft (second rotary shaft), Cg: Rotation center axis (of driven gear), Cr: Rotation center axis (of output shaft), E1: Drive-side end, E2: Output-side end, P1: Non-parking position, and P2: Parking position

## Claims

1. A vehicle parking device comprising:
a motor that generates a driving force for switching between a parking lock state and a parking lock released state of a vehicle;
a transmission mechanism connected to the motor to transmit a driving force of the motor; and
a parking rod connected to the transmission mechanism to travel between a parking position corresponding to the parking lock state and a non-parking position corresponding to the parking lock released state, wherein
the transmission mechanism includes
a driven gear that rotates about a rotation center axis by a driving force from the motor,
a link member including a drive-side end connected to the driven gear to rotate as the driven gear rotates, and an output-side end that is another end and rotates as the drive-side end rotates, and
a first rotary shaft disposed on the rotation center axis of the driven gear, and
the link member includes a relief portion to avoid interference with the first rotary shaft while the link member travels between the parking lock state and the parking lock released state.

2. The vehicle parking device according to claim 1, wherein the relief portion is bent or curved to avoid interference with the first rotary shaft while the link member travels between the parking lock state and the parking lock released state.

3. The vehicle parking device according to claim 1, wherein the rotation center axis of the driven gear, the drive-side end of the link member, and the output-side end of the link member are aligned in the parking lock state when viewed from one side in an extending direction of the rotation center axis of the driven gear.

4. The vehicle parking device according to claim 3, wherein the rotation center axis of the driven gear, the drive-side end of the link member disposed opposite the output-side end with respect to the rotation center axis of the driven gear, and the output-side end of the link member are aligned when viewed from one side in an extending direction of the rotation center axis of the driven gear.

5. The vehicle parking device according to claim 1, wherein the rotation center axis of the driven gear, the drive-side end of the link member, and the output-side end of the link member are aligned in the parking lock released state when viewed from one side in an extending direction of the rotation center axis of the driven gear.

6. The vehicle parking device according to claim 5, wherein the rotation center axis of the driven gear, the drive-side end of the link member disposed on the output-side end side with respect to the rotation center axis of the driven gear, and the output-side end of the link member are aligned when viewed from one side in an extending direction of the rotation center axis of the driven gear.

7. The vehicle parking device according to claim 1, wherein
the transmission mechanism further includes a stopper that prevents further rotation of the driven gear due to an external force applied to the parking rod in the parking lock released state, and prevents further rotation of the driven gear due to an external force applied to the parking rod in the parking lock state, and
in the parking lock released state, the stopper prevents further rotation of the driven gear, and the link member with the drive-side end and the output-side end aligned with the rotation center axis of the driven gear prevents rotation of the driven gear that returns the parking rod to the parking position, and in the parking lock state, the stopper prevents further rotation of the driven gear, and the link member with the drive-side end and the output-side end aligned with the rotation center axis of the driven gear prevents rotation of the driven gear that returns the parking rod to the non-parking position.

8. The vehicle parking device according to claim 1, wherein
the transmission mechanism further includes a connecting member connecting the link member and the parking rod,
the connecting member includes a second rotary shaft disposed at a position of a rotation center of the connecting member, and
the connecting member is configured to rotate about a rotation center axis passing through a rotation center of the second rotary shaft.
